# EUROPEAN PATENT SPECIFICATION

(11) **EP 2 712 130 B1**
(45) Date of publication and mention of the grant of the patent: **23.08.2017**
(21) Application number: 12789340.2
(22) Date of filing: 27.04.2012
(51) Int. Cl.: H04L 12/859, H04L 12/851, H04L 12/915, H04L 12/927

(54) **SERVICE CONTROL METHOD AND SYSTEM FOR AUTONOMOUS NETWORK**
DIENSTSTEUERUNGSVERFAHREN UND -SYSTEM FÜR EIN AUTONOMES NETZWERK
PROCÉDÉ ET SYSTÈME DE COMMANDE DE SERVICE POUR RÉSEAU AUTONOME

(30) Priority: 20.05.2011 CN 201110131799
(43) Date of publication of application: 26.03.2014
(73) Proprietor: ZTE Corporation, Shenzhen, Guangdong 518057 (CN)
(72) Inventor: GONG, Yuliang, Shenzhen Guangdong 518057 (CN)
(74) Representative: Lavoix
(86) International application number: PCT/CN2012/074867
(87) International publication number: WO 2012/159525

(56) References cited:
- EP-A1- 2 315 392
- CN-A- 1 798 364
- CN-A- 101 340 374
- CN-A- 102 201 990

## Description

### TECHNICAL FIELD

The disclosure relates to service identification and Quality of Service (QoS) assurance in the field of data communications, and in particular to a service control method and system for an autonomous network.

### BACKGROUND

Along with the rapid development of Internet technologies, contents borne on an Internet Protocol (IP) network are increasingly rich. Moreover, network service providers provide more and more service contents to subscribers, and there are more and more kinds of service applications as well. These developments not only bring prosperity to networks, but also bring forward many questions to operators, enterprises and subscribers in terms of network management, service operation and maintenance, network security and the like. Especially, a Peer to Peer (P2P) technology is rising in recent years, and applications such as file exchange, voices and videos based on the P2P technology consume huge bandwidth according to statistics, which occupies more than 80% of Internet traffics. For operators, identification of different services in their autonomous networks and providing different QoS for different service become an imperious demand. The aforementioned problem is caused by that services cannot be identified due to lack of capacities of management and control over a service layer in traditional networks. In the face of such demand, a deep packet inspect device for completing service identification, management and control function is produced.

At present, main deployment modes of the deep packet inspect device include a distributed deployment mode at access and aggregation positions of an autonomous network and an intensive deployment mode at an exit of an autonomous network. Wherein, the distributed deployment mode at access and aggregation positions cannot solve congestions at the exit of the autonomous network, and QoS at the exit is uncontrollable. The intensive deployment mode at an exit cannot control Qos of an interior service of the autonomous network, and along with the development of an Internet, exit bandwidths of networks are increasing continuously. In order to adapt the increase of exit bandwidths and difficulty of service identification, performance bottleneck will be likely to occur in the future on devices deployed at the exit intensively, and the devices will be overburdened. If the deep packet inspect devices are simply deployed at access and aggregation positions and an exit of a network, then costs are very high, and hardware investments are wasted due to secondary identification of a packet. Furthermore, the aforementioned drawback when merely deployed on the exit intensively still exists.

EP 2315392A1 discloses different quality of service policies are enforced for packets from traffic streams of different type in a communicatio network, according to the type of the traffic types of traffic. The learning phase teaching by example of characteristics that must be used to distinguish the different types of traffic, in the learning phase, an indication is received of a quality of service pilicy that is required for user applications of a selected type. An indication is provided indicating execution of a user application of said type in a user domain and characteristics of packet traffic are derived from inspection of packets transmitted through the communication network to and/or from the user domain during the indicated execution. In the operation phase packet traffic in the network to and/or from the user domain is inspectec. It is detected whether observed characteristics of the packet traffic match the derived characteristics. When a match is detected, enforcment of the quality of service policy in the network to packet traffic of the seleceted type of user application is triggered.

### SUMMARY

The disclosure is intended to provide a service control method and system for an autonomous network, according to claims 1-6 and 7-8, respectively, so as to solve the problem of ensuring QoS of the autonomous network.

According to an aspect of the disclosure, a service control method for an autonomous network provided by the disclosure includes:
after a deep packet inspect device marks a service packet by using priority information, to which a field of the service packet from a user terminal corresponds, as control information, the deep packet inspect device transmits the service packet to a forwarding device of an autonomous network;
after the forwarding device of the autonomous network performs QoS processing on the service packet according to the control information in the received service packet, the forwarding device of the autonomous network transmits the service packet to a service control module; wherein the service control module is deployed at an exit of the autonomous network;
the service control module establishes a connection table item by using the received service packet, and transmits the service packet to an external network;
   wherein the establishing, by the service control module, a connection table item by using the received service packet, comprises: recording, by the service control module, the control information, and five-element-group information extracted according to the service packet; and
when a response packet of the service packet returned by the external network is received by the service control module, the service control module extracts five-element-group information of the response packet; looks up, by the service control module, the control information corresponding to the connection table item from the connection table item according to the five-element-group information of the response packet, adds the found control information into the response packet, and transmitts the response packet to the forwarding device of the autonomous network; and the forwarding device of the autonomous network performs QoS processing on the response packet according to the control information.

Preferably, the step that the deep packet inspect device marks a service packet by using priority information, to which a field of a service packet from a user terminal corresponds, as control information may include:
the deep packet inspect device receives the service packet from the user terminal of the autonomous network, and identifies the field of the service packet; and
serves the priority information pre-configured for the field as the control information used for QoS processing of the service packet.

Preferably, the performing QoS processing may include:
the forwarding device of the autonomous network performs QoS processing of forwarding or discarding the service packet according to the control information of the service packet.

Preferably, the method may further include: before the service control module establishes a connection table item by using the received service packet,
after the service packet forwarded by the forwarding device of the autonomous network is received the service control module, the service control module looks up whether a connection table item corresponding to the service packet exists in the service control module, if the connection table item corresponding to the service packet already exists, the service control module updates control information in the connection table item by using the control information of the service packet; otherwise, the service control module establishes a connection table item by using the received service packet.

Preferably, wherein the five-element-group information includes a source IP address, a destination IP address, a source port number, a destination port number and a protocol number.

Preferably, the method may further include: before the found control information is added into the response packet,
when the service control module fails to find the control information corresponding to the connection table item, the service control module changes no control information of the response packet or adds default control information into the response packet.

Preferably, the method may also include: before the service control module establishes a connection table item by using the received service packet, and transmits the service packet to an external network,
the service control module determines, according to a preset port, that a packet is a service packet transmitted to the autonomous network or a response packet received from the autonomous network.

According to another aspect of the disclosure, a service control system for an exit of a network provided by the disclosure includes: a deep packet inspect device, a forwarding device of an autonomous network, and a service control module, wherein
the deep packet inspect device is configured to transmit a service packet to the forwarding device of the autonomous network after the deep packet inspect device marks the service packet by using priority information, to which a field of the service packet from a user terminal corresponds, as control information;
the forwarding device of the autonomous network is configured to: transmit the service packet to a service control module after the forwarding device of the autonomous network performs QoS processing on the service packet according to the control information in the service packet forwarded by the deep packet inspect device; and receive a response packet transmitted from the service control module, and perform QoS processing on the response packet according to the control information in the response packet; wherein the service control module is deployed at an exit of the autonomous network; and
the service control module is configured to: establish a connection table item by using the service packet forwarded by the forwarding device of the autonomous network, and transmit the service packet to an external network; and when the response packet of the service packet returned by the external network is received by the service control module, extract five-element-group information of the response packet; look up the control information corresponding to the connection table item from the connection table item according to the five-element-group information of the response packet, add the found control information into the response packet, and then transmit the response packet to the forwarding device of the autonomous network,
wherein the service control module is specifically configured to record the control information, and five-element-group information extracted according to the service packet.

Preferably, the forwarding device of the autonomous network may include an interior router and a border router.

The service control module may serve as a network device by itself, or the service control module may be integrated in a border router at an exit of the autonomous network.

Compared with the prior art, a beneficial effect of the disclosure is as follows:
by means of deploying a low-cost and high-performance service control module at an exit of an autonomous network and in cooperation with the deep packet inspect devices deployed at access and aggregation positions in a distributed manner, so as to improve QoS of the whole autonomous network.

### BRIEF DESCRIPTION OF THE DRAWINGS

Fig. 1 is a schematic flowchart of a service control method for an autonomous network according to the disclosure;
Fig. 2 is a schematic flowchart of a processing flow of a service control module according to the disclosure;
Fig. 3 is a schematic diagram of a structure of a service control system for an autonomous network according to the disclosure;
Fig. 4 is a schematic diagram of a structure of a service control system for an autonomous network according to an embodiment of the disclosure; and
Fig. 5 is a workflow diagram of a service control system for an autonomous network provided by an embodiment of the disclosure.

### DETAILED DESCRIPTION

Preferable embodiments of the disclosure are elaborated below with reference to the drawings. It should be understood that the preferable embodiments illustrated below are merely used for explaining and interpreting the disclosure instead of limiting the disclosure.

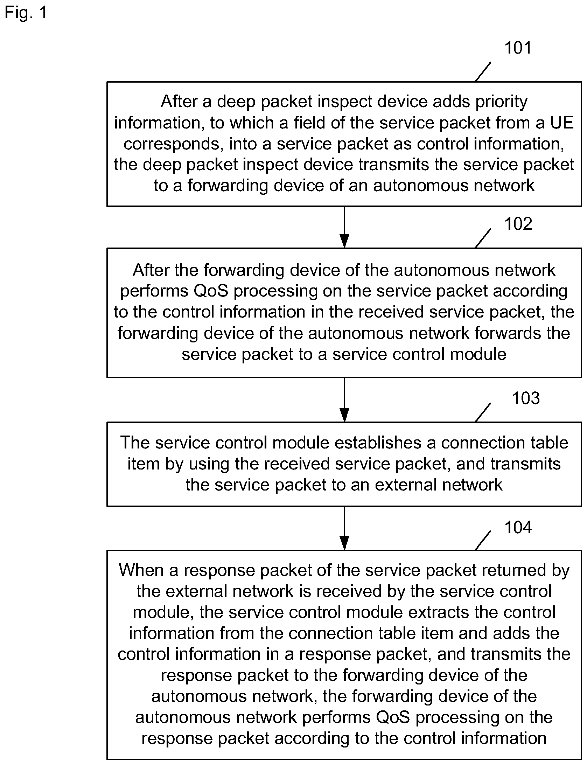

Fig. 1 shows a schematic flowchart of a service control method for an autonomous network provided by the disclosure, which includes:
Step 101: after a deep packet inspect device marks a service packet by using priority information corresponding to a field of the service packet from a UE as control information, the deep packet inspect device transmits the service packet to a forwarding device of an autonomous network;
Step 102: after the forwarding device of the autonomous network performs QoS processing on the service packet according to the control information in the received service packet, the forwarding device of the autonomous network forwards the service packet to a service control module;
Step 103: the service control module establishes a connection table item by using the received service packet, and transmits the service packet to an external network; and
Step 104: when a response packet of the service packet returned by the external network is received by the service control module, the service control module extracts the control information from the connection table item to mark a response packet and transmits the response packet to the forwarding device of the autonomous network, the forwarding device of the autonomous network performs QoS processing on the response packet according to the control information.

Step 101 includes: the deep packet inspect device receives the service packet from the user terminal of the autonomous network, and identifies the field of the service packet; and serves the priority information pre-configured for the field as the control information used for QoS processing of the service packet.

In Step 101, the marking a service packet refers to adding the control information into the service packet.

Step 102 includes: the forwarding device of the autonomous network performs QoS processing of forwarding or discarding the service packet according to the control information of the service packet, wherein the forwarding refers to forwarding according to routing information in the service packet, which belongs to the prior art and is not repeated here.

Step 103 further includes: after the service packet forwarded by the forwarding device of the autonomous network is received by the service control module, the service control module looks up whether a connection table item corresponding to the service packet exists in the service control module, and when the connection table item corresponding to the service packet exists in the service control module, the service control module updates control information in the connection table item by using the control information of the service packet.

Wherein, the connection table item includes: the control information, and five-element-group information extracted according to the service packet, wherein the five-element-group information of the service packet includes a source IP address, a destination IP address, a source port number, a destination port number and a protocol number of the service packet.

Step 104 includes: the service control module receives the response packet of the service packet returned by the external network, and extracts five-element-group information of the response packet; the service control module looks up control information corresponding to the connection table item from the connection table item according to the five-element-group information of the response packet, adds the found control information into the response packet, and then transmits the response packet to the forwarding device of the autonomous network; and the forwarding device of the autonomous network performs QoS processing of forwarding or discarding the response packet according to the control information in the received response packet.

Step 104 further includes: if the service control module fails to find the control information corresponding to the connection table item, then the service control module changes no control information of the response packet, or marks as default control information.

In Step 104, the marking a response packet refers to adding the control information into the response packet.

The service control module determines, according to a preset port, that a packet is a service packet that flows out of the autonomous network or a response packet that flows into the autonomous network.

In other words, in the disclosure, a deep packet inspect device deployed at an access and aggregation position in a distributed mode identifies a service packet from a user terminal, and marks priority information as control information on the service packet, so as to make a forwarding device perform QoS ensuring by using the control information marked on the service packet when the service packet is forwarded in a large-scale or middle-scale autonomous network. If it is a service packet to be transmitted to an external network, when the service packet reaches an interface between the autonomous network and the external network, a service control module records five-element-group information including a source IP address, a destination IP address, a source port address, a destination port address and a protocol number, and control information corresponding to the five-element-group information, then forwards the service packet to the external network. If it is a response packet returned from the external network, when the response packet is returned to the interface between the autonomous network and the external network, the service control module searches a connect table item by five-element-group information of the response packet; if a record exists, priority identification is performed on the response packet according to recorded priority, so that a forwarding device on the way can ensure QoS according to control information of the response packet when the response packet is forwarded in the autonomous network subsequently. The control information can be at a TOS field, an MPLS priority field, or 802.1Q priority field of an IP head.

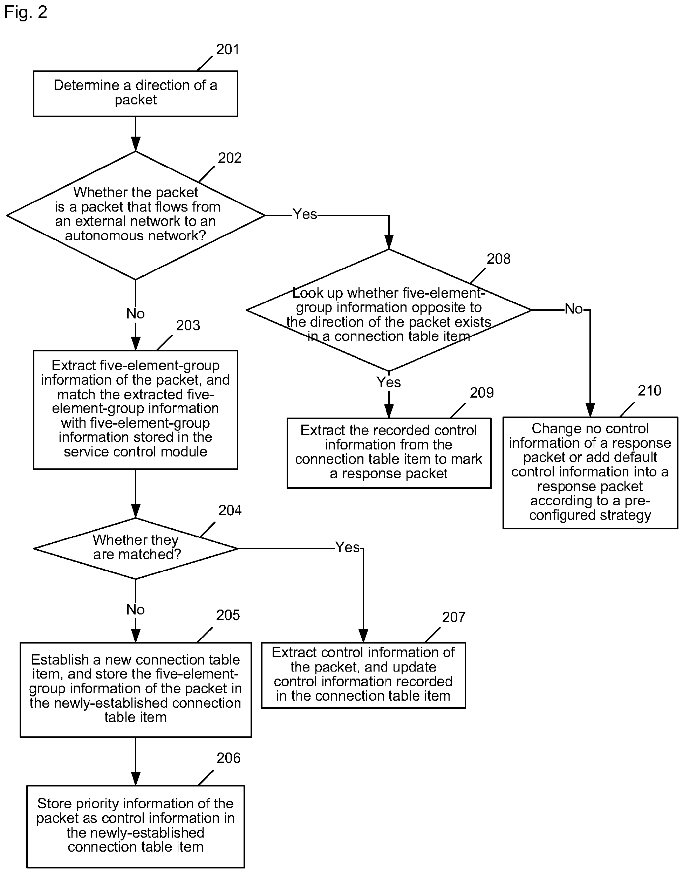

Fig. 2 shows a processing flow of a service control module provided by the disclosure, which includes:
Step 201: a service control module determines a direction of a packet according to a preset port after a packet is received by the service control module;
Step 202: the service control module determines whether the packet is a packet that flows from an external network to an autonomous network, if yes, Step 208 is executed; otherwise, Step 203 is executed;
Step 203: when it is determined that the packet is a packet that flows from the autonomous network to the external network, the service control module extracts five-element-group information of the packet, and matches the extracted five-element-group information with five-element-group information stored in the service control module;
Step 204: the service control module determines whether the extracted five-element-group information is matched with the five-element-group information stored in the service control module, if yes, Step 207 is executed; otherwise, Step 205 is executed;
Step 205: the service control module establishes a new connection table item, and stores the five-element-group information of the packet in the newly-established connection table item;
Step 206: the service control module stores priority information of the packet as control information in the newly-established connection table item; and the flow terminates;
Step 207: the service control module extracts control information of the packet, and updates control information recorded in the connection table item; and the flow terminates;
Step 208: the service control module looks up, according to the extracted five-element-group information of the packet, whether five-element-group information opposite to the direction of the packet exists in the connection table item, if yes, Step 209 is executed; otherwise, Step 210 is executed;
Step 209: the service control module extracts the recorded control information from the connection table item to mark a response packet; and the flow terminates; and
Step 210: the service control module changes no control information of the response packet or adds default control information into the response packet according to a pre-configured strategy.

In aforementioned steps, the five-element-group information includes a source IP address, a destination IP address, a source port number, a destination port number and a protocol number.

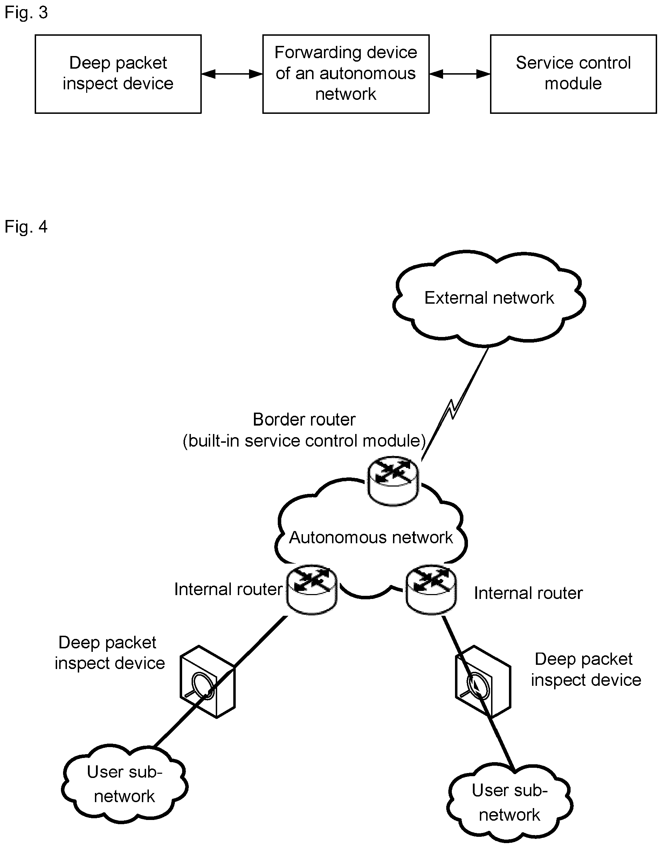

A service control system at an exit of a network provided by the disclosure is shown in Fig. 3, which includes: a deep packet inspect device, a forwarding device of an autonomous network and a service control module, wherein
the deep packet inspect device is configured to transmit a service packet to the forwarding device of the autonomous network after the deep packet inspect device marks the service packet by using priority information, to which a field of the service packet from a user terminal corresponds, as control information;
the forwarding device of the autonomous network is configured to: transmit the service packet to a service control module after the forwarding device of the autonomous network performs Quality of Service (QoS) processing on the service packet according to the control information in the service packet forwarded by the deep packet inspect device; and receive a response packet transmitted from the service control module, and perform QoS processing on the response packet according to the control information in the response packet; and
the service control module is configured to: establish a connection table item by using the service packet forwarded by the forwarding device of the autonomous network, and transmit the service packet to an external network; and when the response packet of the service packet returned by the external network is received by the service control module, extract the control information from the connection table item to mark the response packet and then transmit the response packet to the forwarding device of the autonomous network.

The forwarding device of the autonomous network includes an interior router and a border router.

The service control module may serve as a device by itself, or the service control module may be integrated in a forwarding device at an exit of the autonomous network, namely, the service control module is integrated in the border router.

In an embodiment, Fig. 4 is a schematic diagram of a structure of a service control system for an autonomous network according to an embodiment of the disclosure, in which a service control module is arranged in a border router located at an edge of an autonomous network, internal routers of the autonomous network serve as forwarding devices of the autonomous network, and user sub-networks consist of user terminals.

Specifically, when the autonomous network and an external network perform packet interaction, if the autonomous network sends a packet, a deep packet inspect device marks a service packet with control information after identifying a service field, and transmits the service packet to a border router located at the edge of the network after an internal router of the autonomous network performs QoS processing on the service packet; and
if a packet transmitted by the external network is received by the autonomous network, then the packet is transmitted to the border router, and an edge service control module in the border router determines, according to the packet, a priority of the packet as control information to mark a priority of a packet received by the autonomous network.

In this way, regardless of whether a packet is exchanged in the interior of the autonomous network or exchanged with the external network, the packet can be marked with control information when inputs into the autonomous network, and QoS processing can be performed on all internal routers of the autonomous network. When a congested internal router exists in the autonomous network or congestion occurs at the exit of the autonomous network, a packet with high priority is forwarded according to a priority recorded in the control information, and a packet with low priority is discarded.

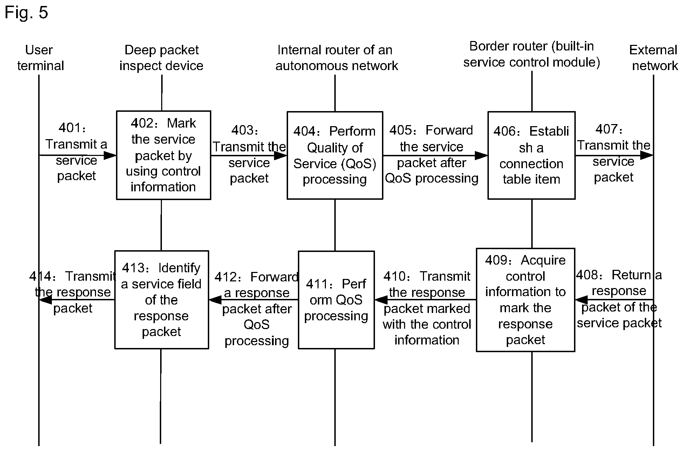

A workflow of the service control system for an autonomous network provided by Fig. 4 is described below, especially as shown in Fig. 5, which includes the following steps:
Step 401: a user terminal initiates a service, and transmits a service packet to a deep packet inspect device;
Step 402: the deep packet inspect device identifies a service field of the service packet, serves priority information of the service packet as control information according to priority information pre-configured for the service field, and marks the service packet by using the control information;
Step 403: the deep packet inspect device transmits the marked service packet to an internal router of an autonomous network;
Step 404: the internal router of the autonomous network performs QoS processing according to the control information, for example, a packet with low priority is discarded when congestion occurs in the autonomous network;
Step 405: the internal router of the autonomous network forwards the service packet after QoS processing to a service processing module;
Step 406: the service processing module forwards the service packet after QoS processing to a service control module, establishes a connection table item, and stores five-element-group information of the service packet and control information corresponding to the connection table item in the connection table item;
Step 407: the service processing module sends the service packet to an external network;
Step 408: after the service packet is received by the external network, the external network returns a response packet of the service packet to the service control module;
Step 409: the service control module acquires, according to the connection table item, control information to mark the response packet;
Step 410: the service control module transmits the response packet marked with the control information to the internal router of the autonomous network;
Step 411: the internal router of the autonomous network performs QoS processing of forwarding or discarding the response packet according to the control information, for example, a packet with low priority is discarded when congestion occurs in the autonomous network;
Step 412: the internal router of the autonomous network forwards the response packet after QoS processing to the deep packet inspect device;
Step 413: the deep packet inspect device identifies a service field of the response packet; and
Step 414: the deep packet inspect device transmits the response packet to the user terminal according to the service field.

In the disclosure, if a service is initiated by a user terminal of an external network, then according to interaction of the service, only a first packet fails to match five-element-group information opposite to the direction of the first packet in the connection table item of the service control module. According to a pre-configuration, default control information can be marked on the first packet or control information of the first packet is not changed. When a response packet of the autonomous network reaches the service control module, a processing flow is the same as the aforementioned steps.

To sum up, the disclosure has the following beneficial effects:
by means of cooperation of a deep packet inspect device deployed at an access or aggregation position in a distributed manner and a service control module at an exit, the disclosure improves QoS of the whole autonomous network, and is adaptive for a large-scale and middle-scale IP network, for example, a metropolitan area network or an IP network operated and managed by a certain operator oneself; and
the service control module deployed at the exit of the autonomous network according to the disclosure has simple functions, which is easy to implement, and can easily deal with increase of further exit bandwidths and complexity of service identification.

Although the disclosure is elaborated above, the disclosure is limited to the aforementioned description. Those skilled in the art can make various modifications according to principle of the disclosure. Therefore, any modifications made within the principle of the disclosure shall fall within the scope of protection of the disclosure.

## Claims

1. A service control method for an autonomous network, comprising:
marking, by a deep packet inspect device, a service packet received from a user terminal by using priority information, to which a field of the service packet from the user terminal corresponds, as control information;
transmitting, by the deep packet inspect device, the service packet to a forwarding device of an autonomous network performing QoS processing on the service packet, by the forwarding device of the autonomous network, according to the control information in the received service packet; transmitting, by the forwarding device of the autonomous network, the service packet to a service control module; wherein the service control module is deployed at an exit of the autonomous network; establishing, by the service control module, a connection table item by using the received service packet, and transmitting the service packet to an external network;
wherein the establishing, by the service control module, a connection table item by using the received service packet, comprises: recording, by the service control module, the control information, and five-element-group information extracted according to the service packet;
and
when the response packet of the service packet returned by the external network is received by the service control module, extracting, by the service control module, five-element-group information of the response packet; looking up, by the service control module, the control information corresponding to the connection table item from the connection table item according to the five-element-group information of the response packet, adding the found control information into the response packet, and transmitting the response packet to the forwarding device of the autonomous network; and performing, by the forwarding device of the autonomous network, QoS processing on the response packet according to the control information.

2. The method according to claim 1, wherein the marking, by a deep packet inspect device, the service packet by using priority information, to which a field of the service packet from a user terminal corresponds, as control information, comprises:
receiving, by the deep packet inspect device, the service packet from the user terminal of the autonomous network, and identifying the field of the service packet; and
serving the priority information pre-configured for the field as the control information used for QoS processing of the service packet.

3. The method according to claim 1, wherein the performing QoS processing comprises:
performing, by the forwarding device of the autonomous network, QoS processing of forwarding or discarding the service packet according to the control information of the service packet.

4. The method according to claim 1, further comprising: before the service control module establishes a connection table item by using the received service packet,
after the service packet forwarded by the forwarding device of the autonomous network is received by the service control module, looking up, by the service control module, whether a connection table item corresponding to the service packet exists in the service control module, when the connection table item corresponding to the service packet exists in the service control module, updating control information in the connection table item by using the control information of the service packet; otherwise, establishing a connection table item by using the received service packet.

5. The method according to claim 1 or 4, wherein the five-element-group information comprises a source Internet Protocol (IP) address, a destination IP address, a source port number, a destination port number and a protocol number.

6. The method according to claim 1, further comprising: before the found control information is added into the response packet,
when the service control module fails to find the control information corresponding to the connection table item, changing, by the service control module, no control information of the response packet, or adding default control information into the response packet.

7. The method according to claim 1, further comprising: before the service control module establishes a connection table item by using the received service packet, and transmits the service packet to an external network,
determining, by the service control module, according to a preset port, a packet is a service packet transmitted to the autonomous network or a response packet received from the autonomous network.

8. A service control system for an exit of a network, comprising: a deep packet inspect device, a forwarding device of an autonomous network, and a service control module, wherein
the deep packet inspect device is configured to transmit a service packet to the forwarding device of the autonomous network after the deep packet inspect device marks the service packet by using priority information, to which a field of the service packet from a user terminal corresponds, as control information;
the forwarding device of the autonomous network is configured to: transmit the service packet to a service control module after the forwarding device of the autonomous network performs Quality of Service (QoS) processing on the service packet according to the control information in the service packet forwarded by the deep packet inspect device; and receive a response packet transmitted from the service control module, and perform QoS processing on the response packet according to the control information in the response packet; wherein the service control module is deployed at an exit of the autonomous network;
and
the service control module is configured to: establish a connection table item by using the service packet forwarded by the forwarding device of the autonomous network, and transmit the service packet to an external network; and when the response packet of the service packet returned by the external network is received by the service control module, extract five-element-group information of the response packet; look up the control information corresponding to the connection table item from the connection table item according to the five-element-group information of the response packet, add the found control information into the response packet, and then transmit the response packet to the forwarding device of the autonomous network;
wherein the service control module is specifically configured to record the control information, and five-element-group information extracted according to the service packet.

9. The system according to claim 8, wherein
the forwarding device of the autonomous network comprises an interior router and a border router; and
the service control module serves as a device by itself, or the service control module is integrated in a border router at an exit of the autonomous network.

## Patentansprüche

1. Dienststeuerungsverfahren für ein autonomes Netzwerk, umfassend:
Kennzeichnen durch eine Deep-Packet-Inspect-Vorrichtung eines Dienstpakets, das von einem Benutzerendgerät empfangen wird, durch Prioritätsinformationen, welchen ein Feld des Dienstpakets vom Benutzerendgerät entspricht, als Steuerinformationen;
Senden des Dienstpakets durch die Deep-Packet-Inspect-Vorrichtung an eine Weiterleitungsvorrichtung eines autonomen Netzwerks;
Durchführen von QoS-Verarbeitung am Dienstpaket durch die Weiterleitungsvorrichtung des autonomen Netzwerks gemäß den Steuerinformationen im empfangenen Dienstpaket; Senden des Dienstpakets durch die Weiterleitungsvorrichtung des autonomen Netzwerks an ein Dienststeuerungsmodul;
wobei das Dienststeuerungsmodul an einem Ausgang des autonomen Netzes bereitgestellt wird;
Erstellen durch das Dienststeuerungsmodul eines Verbindungstabellenelements durch Verwenden des empfangenen Dienstpakets und Senden des Dienstpakets an ein externes Netzwerk;
wobei das Erstellen eines Verbindungstabellenelements durch Verwenden des empfangenen Dienstpakets durch das Dienststeuerungsmodul umfasst: Aufzeichnen durch das Dienststeuerungsmodul der Steuerinformationen und gemäß dem Dienstpaket extrahierter Fünf-Elemente-Gruppeninformationen; und
Extrahieren von Fünf-Elemente-Gruppeninformationen des Antwortpakets durch das Dienststeuerungsmodul, wenn das Antwortpaket des Dienstpakets, das durch das externe Netzwerk zurückgesendet wird, durch das Dienststeuerungsmodul empfangen wird; Nachschlagen durch das Dienststeuerungsmodul der Steuerinformationen, die dem Verbindungstabellenelement entsprechen, aus dem Verbindungstabellenelement gemäß den Fünf-Elemente-Gruppeninformationen des Antwortpakets, Hinzufügen der gefundenen Steuerinformationen zum Antwortpaket und Senden des Antwortpakets an die Weiterleitungsvorrichtung des autonomen Netzwerks und Durchführen von QoS-Verarbeitung am Antwortpaket gemäß den Steuerinformationen durch die Weiterleitungsvorrichtung des autonomen Netzwerks.

2. Verfahren nach Anspruch 1, wobei das Kennzeichnen durch die Deep-Packet-Inspect-Vorrichtung des Dienstpakets durch Verwenden von Prioritätsinformationen, welchen ein Feld des Dienstpakets vom Benutzerendgerät entspricht, als Steuerinformationen umfasst:
Empfangen durch die Deep-Packet-Inspect-Vorrichtung des Dienstpakets vom Benutzerendgerät des autonomen Netzwerks und Identifizieren des Feldes des Dienstpakets; und
wobei die für das Feld vorkonfigurierten Prioritätsinformationen als die Steuerinformationen dienen, die zur QoS-Verarbeitung des Dienstpakets verwendet werden.

3. Verfahren nach Anspruch 1, wobei das Durchführen von QoS-Verarbeitung umfasst:
Durchführen durch die Weiterleitungsvorrichtung des autonomen Netzwerks von QoS-Verarbeitung des Weiterleitens oder Verwerfens des Dienstpakets gemäß den Steuerinformationen des Dienstpakets.

4. Verfahren nach Anspruch 1, ferner umfassend, bevor das Dienststeuerungsmodul ein Verbindungstabellenelement durch Verwenden des empfangenen Dienstpakets erstellt:
Nachschlagen, nachdem das durch die Weiterleitungsvorrichtung des autonomen Netzwerks weitergeleitete Dienstpaket durch das Dienststeuerungsmodul empfangen wird, durch das Dienststeuerungsmodul, ob ein Verbindungstabellenelement, das dem Dienstpaket entspricht, im Dienststeuerungsmodul vorhanden ist, Aktualisieren, wenn das Verbindungstabellenelement, das dem Dienstpaket entspricht, im Dienststeuerungsmodul vorhanden ist, von Steuerinformationen im Verbindungstabelenelement durch Verwenden der Steuerinformationen des Dienstpakets; andernfalls Erstellen eines Verbindungstabellenelements durch Verwenden des empfangenen Dienstpakets.

5. Verfahren nach Anspruch 1 oder 4, wobei die Fünf-Elemente-Gruppeninformationen eine Internetprotokoll (IP)-Ursprungsadresse, eine IP-Zieladresse, eine Ursprungsportnummer, einer Zielportnummer und eine Protokollnummer umfassen.

6. Verfahren nach Anspruch 1, ferner umfassend, bevor die gefundenen Steuerinformationen zum Antwortpaket hinzugefügt werden:
Ändern durch das Dienststeuerungsmodul keiner Steuerinformationen des Antwortpakets oder Hinzufügen von Standardsteuerinformationen zum Antwortpaket, wenn das Dienststeuerungsmodul die Steuerinformationen, die dem Verbindungstabellenelement entsprechen, nicht findet.

7. Verfahren nach Anspruch 1, ferner umfassend, bevor das Dienststeuerungsmodul ein Verbindungstabellenelement durch Verwenden des empfangenen Dienstpakets erstellt und das Dienstpaket an ein externes Netzwerk sendet:
Bestimmen durch das Dienststeuerungsmodul gemäß einem voreingestellten Port, dass ein Paket ein Dienstpaket ist, das an das autonome Netzwerk gesendet wird, oder ein Antwortpaket ist, das vom autonomen Netzwerk empfangen wird.

8. Dienststeuerungssystem für einen Ausgang eines Netzwerks, umfassend: eine Deep-Packet-Inspect-Vorrichtung, eine Weiterleitungsvorrichtung eines autonomen Netzwerks und ein Dienststeuerungsmodul, wobei
die Deep-Packet-Inspect-Vorrichtung so ausgelegt ist, dass sie ein Dienstpaket an die Weiterleitungsvorrichtung des autonomen Netzwerks sendet, nachdem die Deep-Packet-Inspect-Vorrichtung das Dienstpaket durch Verwenden von Prioritätsinformationen, welchen ein Feld des Dienstpakets von einem Benutzerendgerät entspricht, als Steuerinformationen kennzeichnet;
die Weiterleitungsvorrichtung des autonomen Netzwerls ausgelegt ist zum: Senden des Dienstpakets an ein Dienststeuerungsmodul, nachdem die Weiterleitungsvorrichtung des autonomen Netzwerks Dienstgüte (QoS)-Verarbeitung am Dienstpaket gemäß den Steuerinformationen in dem von der Weiterleitungsvorrichtung weitergeleiteten Dienstpaket durchführt; und Empfangen eines vom Dienststeuerungsmodul gesendeten Antwortpakets und Durchführen von QoS-Verarbeitung am Antwortpaket gemäß den Steuerinformationen im Antwortpaket; wobei das Dienststeuerungsmodul an einem Ausgang des autonomen Netzwerks bereitgestellt wird;
und
das Dienststeuerungsmodul konfiguriert ist zum: Erstellen eines Verbindungstabellenelements durch Verwenden des von der Weiterleitungsvorrichtung des autonomen Netzwerks weitergeleiteten Dienstpakets und Senden des Dienstpakets an ein externes Netzwerk; und Extrahieren, wenn das vom externen Netzwerk zurückgesendete Antwortpaket durch das Dienststeuerungsmodul empfangen wird, von Fünf-Elemente-Gruppeninformationen des Antwortpakets; Nachschlagen der Steuerinformationen, die dem Verbindungstabellenelement entsprechen, aus dem Verbindungstabellenelement gemäß den Fünf-Elemente-Gruppeninformationen des Antwortpakets, Hinzufügen der gefundenen Steuerinformationen zum Antwortpaket und anschließenden Senden des Antwortpakets an die Weiterleitungsvorrichtung des autonomen Netzwerks;
wobei das Dienststeuerungsmodul insbesondere zum Aufzeichnen der Steuerinformationen und gemäß dem Dienstpaket extrahierter Fünf-Elemente-Gruppeninformationen ausgelegt ist.

9. System nach Anspruch 8, wobei:
die Weiterleitungsvorrichtung des autonomen Netzwerks einen internen Router und einen Border-Router umfasst; und
das Dienststeuerungsmodul als eine Vorrichtung an sich dient, oder das Dienststeuerungsmodul in einen Border-Router an einem Ausgang des autonomen Netzwerks integriert ist.

## Revendications

1. Procédé de commande de service pour un réseau autonome, comprenant les étapes ci-dessous consistant à :
marquer, par le biais d'un dispositif d'inspection profonde des paquets, un paquet de service reçu en provenance d'un terminal d'utilisateur, en utilisant des informations de priorité, auquel correspond un champ du paquet de service provenant du terminal d'utilisateur, en tant que des informations de commande ;
transmettre, par le biais du dispositif d'inspection profonde des paquets, le paquet de service à un dispositif d'acheminement d'un réseau autonome ;
mettre en oeuvre un traitement de qualité QoS sur le paquet de service, par le biais du dispositif d'acheminement du réseau autonome, selon les informations de commande dans le paquet de service reçu ;
transmettre, par le biais du dispositif d'acheminement du réseau autonome, le paquet de service à un module de commande de service ;
dans lequel le module de commande de service est déployé au niveau d'une sortie du réseau autonome ;
établir, par le biais du module de commande de service, un élément de table de connexion en utilisant le paquet de service reçu, et transmettre le paquet de service à un réseau externe ;
dans lequel l'étape d'établissement, par le module de commande de service, d'un élément de table de connexion, en utilisant le paquet de service reçu, comprend l'étape consistant à : enregistrer, par le biais du module de commande de service, les informations de commande, et des informations de groupes de cinq éléments extraites selon le paquet de service ; et
lorsque le paquet de réponse du paquet de service renvoyé par le réseau externe est reçu par le module de commande de service, extraire, par le biais du module de commande de service, des informations de groupes de cinq éléments du paquet de réponse ; rechercher, par le biais du module de commande de service, les informations de commande correspondant à l'élément de table de connexion, à partir de l'élément de table de connexion selon les informations de groupes de cinq éléments du paquet de réponse, ajouter les informations de commande trouvées dans le paquet de réponse, et transmettre le paquet de réponse au dispositif d'acheminement du réseau autonome ; et mettre en oeuvre, par le biais du dispositif d'acheminement du réseau autonome, un traitement de qualité QoS sur le paquet de réponse selon les informations de commande.

2. Procédé selon la revendication 1, dans lequel l'étape de marquage, par le biais d'un dispositif d'inspection profonde des paquets, d'un paquet de service en utilisant des informations de priorité, auquel correspond un champ du paquet de service provenant du terminal d'utilisateur, en tant que des informations de commande, comprend les étapes ci-dessous consistant à :
recevoir, par le biais du dispositif d'inspection profonde des paquets, le paquet de service en provenance du terminal d'utilisateur du réseau autonome, et identifier le champ du paquet de service ; et
desservir les informations de priorité préconfigurées pour le champ en tant que les informations de commande utilisées pour le traitement de qualité QoS du paquet de service.

3. Procédé selon la revendication 1, dans lequel l'étape de mise en oeuvre du traitement de qualité QoS comprend les étapes ci-dessous consistant à :
mettre en oeuvre, par le biais du dispositif d'acheminement du réseau autonome, un traitement de qualité QoS consistant à transmettre ou à abandonner le paquet de service selon les informations de commande du paquet de service.

4. Procédé selon la revendication 1, comprenant en outre les étapes ci-dessous consistant à : avant que le module de commande de service n'établisse un élément de table de connexion en utilisant le paquet de service reçu ; et
après la réception du paquet de service, acheminé par le dispositif d'acheminement du réseau autonome, par le module de commande de service, rechercher, par le biais du module de commande de service, si un élément de table de connexion correspondant au paquet de service existe dans le module de commande de service, lorsque l'élément de table de connexion correspondant au paquet de service existe dans le module de commande de service, mettre à jour des informations de commande dans l'élément de table de connexion en utilisant les informations de commande du paquet de service ; sinon, établir un élément de table de connexion en utilisant le paquet de service reçu.

5. Procédé selon la revendication 1 ou 4, dans lequel les informations de groupes de cinq éléments comportent une adresse de protocole Internet (IP) de source, une adresse IP de destination, un numéro de port de source, un numéro de port de destination et un numéro de protocole.

6. Procédé selon la revendication 1, comprenant en outre l'étape ci-dessous consistant à : avant que les informations de commande trouvées ne soient ajoutées dans le paquet de réponse,
lorsque le module de commande de service ne parvient pas à trouver les informations de commande correspondant à l'élément de table de connexion, ne modifier, par le biais du module de commande de service, aucune information de commande du paquet de réponse, ou ajouter des informations de commande par défaut dans le paquet de réponse.

7. Procédé selon la revendication 1, comprenant en outre l'étape ci-dessous consistant à : avant que le module de commande de service n'établisse un élément de table de connexion en utilisant le paquet de service reçu et ne transmette le paquet de service à un réseau externe :
déterminer, par le biais du module de commande de service, selon un port prédéfini, qu'un paquet correspond à un paquet de service transmis au réseau autonome ou à un paquet de réponse reçu en provenance du réseau autonome.

8. Système de commande de service pour une sortie d'un réseau, comprenant : un dispositif d'inspection profonde des paquets, un dispositif d'acheminement d'un réseau autonome et un module de commande de service, dans lequel :
le dispositif d'inspection profonde des paquets est configuré de manière à transmettre un paquet de service au dispositif d'acheminement du réseau autonome après que le dispositif d'inspection profonde des paquets a marqué le paquet de service en utilisant des informations de priorité, auquel correspond un champ du paquet de service provenant d'un terminal d'utilisateur, en tant que des informations de commande ;
le dispositif d'acheminement du réseau autonome est configuré de manière à : transmettre le paquet de service à un module de commande de service après que le dispositif d'acheminement du réseau autonome a mis en oeuvre un traitement de qualité de service (QoS) sur le paquet de service selon les informations de commande dans le paquet de service acheminé par le dispositif d'inspection profonde des paquets ; recevoir un paquet de réponse transmis à partir du module de commande de service, et mettre en oeuvre un traitement de qualité QoS sur le paquet de réponse selon les informations de commande dans le paquet de réponse ; dans lequel le module de commande de service est déployé au niveau d'une sortie du réseau autonome ; et
le module de commande de service est configuré de manière à : établir un élément de table de connexion en utilisant le paquet de service acheminé par le dispositif d'acheminement du réseau autonome, et transmettre le paquet de service à un réseau externe ; et lorsque le paquet de réponse du paquet de service renvoyé par le réseau externe est reçu par le module de commande de service, extraire des informations de groupes de cinq éléments du paquet de réponse ; chercher les informations de commande correspondant à l'élément de table de connexion à partir de l'élément de table de connexion selon les informations de groupes de cinq éléments du paquet de réponse, ajouter les informations de commande trouvées dans le paquet de réponse, et transmettre ensuite le paquet de réponse au dispositif d'acheminement du réseau autonome ;
dans lequel le module de commande de service est spécifiquement configuré de manière à enregistrer les informations de commande, et les informations de groupes de cinq éléments extraites selon le paquet de service.

9. Système selon la revendication 8, dans lequel
le dispositif d'acheminement du réseau autonome comprend un routeur interne et un routeur de périphérie ; et
le module de commande de service fait office de dispositif autonome, ou le module de commande de service est intégré à un routeur de périphérie au niveau d'une sortie du réseau autonome.
